# EUROPÄISCHE PATENTSCHRIFT

(11) **EP 3 820 641 B1**
(45) Veröffentlichungstag und Bekanntmachung des Hinweises auf die Patenterteilung: **01.02.2023**
(21) Anmeldenummer: 19832372.7
(22) Anmeldetag: 19.12.2019
(51) Int. Cl.: B23K 9/16, B23K 9/29

(54) **GASDÜSE ZUM AUSSTRÖMEN EINES SCHUTZGASSTROMES UND BRENNER MIT EINER GASDÜSE**
GAS NOZZLE FOR THE OUTFLOW OF A PROTECTIVE GAS STREAM, AND TORCH WITH A GAS NOZZLE
BUSE À GAZ POUR L'ÉCOULEMENT D'UN COURANT DE GAZ DE PROTECTION ET BRÛLEUR POURVU D'UNE BUSE À GAZ

(30) Priorität: 11.01.2019 DE 102019100581
(43) Veröffentlichungstag der Anmeldung: 19.05.2021
(73) Patentinhaber: Alexander Binzel Schweisstechnik GmbH & Co. KG, 35418 Buseck (DE)
(72) Erfinder: ROSE, Sascha, 35463 Fernwald (DE); NOLL, Andreas, 35684 Dillenburg (DE)
(74) Vertreter: Müller, Eckhard
(86) Internationale Anmeldenummer: PCT/EP2019/086455
(87) Internationale Veröffentlichungsnummer: WO 2020/144046

(56) Entgegenhaltungen:
- DE-B- 1 210 100
- GB-A- 954 767
- JP-A- S6 238 772
- JP-A- H07 256 462
- US-A1- 2017 080 512
- Irene Hassinger: "Innovative mixing nozzle additively manufactured - VDMA", , 19. Oktober 2016 (2016-10-19), XP055687240, Gefunden im Internet: URL:https://www.vdma.org/en/v2viewer/-/v2a rticle/render/15157542 [gefunden am 2020-04-20]

## Beschreibung

Die Erfindung betrifft eine Gasdüse zum Ausströmen eines Schutzgasstromes nach dem Oberbegriff des Anspruches 1 und einen Brennerhals mit einer Gasdüse nach dem Oberbegriff des Anspruches 10, einen Brenner nach dem Oberbegriff des Anspruches 14 sowie ein Verfahren zum thermischen Fügen von wenigstens einem Werkstück nach dem Oberbegriff des Anspruches 15.

Thermische Lichtbogenfügeverfahren nutzen Energie, um die Werkstücke aufzuschmelzen und sie zu verbinden. In der Blechfertigung kommen standardmäßig "MIG", "MAG" sowie "WIG"-Schweißen zum Einsatz.

Bei schutzgasunterstützten Lichtbogenschweißverfahren mit abschmelzender Elektrode (MSG) steht "MIG" für "Metall-Inertgas", und "MAG" für "Metall-Aktivgas". Bei schutzgasunterstützten Lichtbogenschweißverfahren mit nicht-abschmelzender Elektrode (WSG) steht "WIG" für "Wolfram-Inertgas". Die erfindungsgemäßen Schweißvorrichtungen können als maschinengeführter Schweißbrenner ausgeführt sein.

MAG-Schweißen ist ein Metall-Schutzgasschweiß-Prozess (MSG) mit Aktivgas, bei dem der Lichtbogen zwischen einer kontinuierlich zugeführten, abschmelzenden Drahtelektrode und dem Werkstoff brennt. Die abschmelzende Elektrode liefert den Zusatzwerkstoff zur Bildung der Schweißnaht. MAG-Schweißen kann bei nahezu allen schweißgeeigneten Werkstoffen einfach und wirtschaftlich eingesetzt werden. Je nach Anforderung und Werkstoff werden dabei unterschiedliche Schutzgase eingesetzt.

Beim MSG-Schweißen schützt das zugeführte Aktivgas die Elektrode, den Lichtbogen und das Schmelzbad gegenüber der Atmosphäre. Dies sichert gute Schweißergebnisse mit hohen Abschmelzleistungen unter unterschiedlichsten Bedingungen. Abhängig vom Werkstoff wird als Schutzgas ein Gasgemisch aus Argon CO2, Argon O2 oder reines Argon oder reines CO2 eingesetzt. Je nach Anforderung werden unterschiedliche Drahtelektroden genutzt. MAG-Schweißen ist ein robuster, wirtschaftlicher und vielseitig einsetzbarer Schweißprozess, der sich sowohl für manuelle, mechanische und automatisierte Prozesse eignet.

MAG-Schweißen eignet sich zum Schweißen von un- bzw. niedriglegierten Stählen. Hochlegierte Stähle und Nickelbasislegierungen lassen sich prinzipiell auch mit dem MAG-Prozess schweißen. Der O2- oder CO2-Anteil im Schutzgas ist allerdings gering. Je nach Anforderung an die Schweißnaht und das optimale Schweißergebnis werden unterschiedliche Lichtbogenarten und Schweißprozesse wie der Standard- oder der Pulsprozess verwendet.

Lichtbogenschweißvorrichtungen erzeugen zum Aufschmelzen des Schweißgutes einen Lichtbogen zwischen dem Werkstück und einer abschmelzenden oder nicht abschmelzenden Schweißelektrode. Das Schweißgut sowie die Schweißstelle werden von einem Schutzgasstrom gegenüber den Atmosphärengasen, hauptsächlich N₂, O₂, H₂, der Umgebungsluft abgeschirmt.

Dabei ist die Schweißelektrode an einem Brennerkörper eines Schweißbrenners vorgesehen, der mit einem Lichtbogenschweißgerät verbunden ist. Der Brennerkörper enthält gewöhnlich eine Gruppe von innenliegenden, schweißstromführenden Bauteilen, die den Schweißstrom von einer Schweißstromquelle in dem Lichtbogenschweißgerät zur Spitze des Brennerkopfes auf die Schweißelektrode leiten, um dann von dort aus den Lichtbogen zum Werkstück zu erzeugen.

Der Schutzgasstrom umströmt die Schweißelektrode, den Lichtbogen, das Schweißbad und die Wärmeeinflusszone am Werkstück und wird diesen Bereichen dabei über den Brennerkörper des Schweißbrenners zugeführt. Eine Gasdüse leitet den Schutzgasstrom zum Vorderende des Brennerkopfes, wo der Schutzgasstrom etwa ringförmig um die Schweißelektrode aus dem Brennerkopf austritt.
Die Gasführung zur Gasdüse erfolgt im Stand der Technik in der Regel über Bauteile aus einem Werkstoff mit niedriger elektrischer Leitfähigkeit (Polymere oder Oxidkeramiken), die gleichzeitig als Isolation dienen können.

Der zum Schweißen erzeugte Lichtbogen erhitzt während des Schweißvorgangs das zu schweißende Werkstück sowie gegebenenfalls zugeführtes Schweißgut, sodass diese aufgeschmolzen werden. Durch den Lichtbogenenergieeintrag, die hochenergetische Wärmestrahlung und Konvektion kommt es zu einem signifikanten Wärmeeintrag in den Brennerkopf des Schweißbrenners. Ein Teil der eingetragenen Wärme kann durch den durch den Brennerkopf geleiteten Schutzgasstrom beziehungsweise durch die passive Kühlung in der Umgebungsluft sowie die Wärmeleitung in das Schlauchpaket wieder abgeführt werden.

Ab einer gewissen Schweißstrombelastung des Brennerkopfes ist der Wärmeeintrag jedoch so groß, dass eine sogenannte aktive Kühlung des Brennerkopfes erforderlich ist, um die eingesetzten Bauteile vor thermischem Materialversagen zu schützen. Hierzu wird der Brennerkopf aktiv mit einem Kühlmittel gekühlt, welches den Brennerkopf durchströmt und dabei die aus dem Schweißprozess aufgenommene und unerwünschte Wärme abtransportiert. Als Kühlmittel kann dabei beispielsweise entionisiertes Wasser mit Zusätzen von Ethanol oder Propanol zum Zweck des Frostschutzes verwendet werden.

Neben dem Schweißen kommt auch das Löten in Betracht, um Blechbauteile zu verbinden. Anders als beim Schweißen wird dabei nicht das Werkstück, sondern nur der Zusatzwerkstoff geschmolzen. Der Grund dafür ist, dass beim Löten zwei Kanten durch das Lot als Zusatzwerkstoff miteinander verbunden werden. Die Schmelztemperaturen des Lotwerkstoffes und der Bauteilwerkstoffe liegen weit auseinander, weshalb bei der Bearbeitung nur das Lot schmilzt. Zum Löten eignen sich neben WIG-, Plasma- und MIG-Brennern auch LASER.

Die Lichtbogen-Lötprozesse können im Metallschutzgas-(MSG-L)- und Wolfram-Schutzgas-(WSG-L)-Lötprozesse unterteilt werden. Als Zusatzwerkstoff werden hierbei überwiegend drahtförmige Kupferbasis-Werkstoffe eingesetzt, deren Schmelzbereiche niedriger sind, als die der Grundwerkstoffe. Das Prinzip des MSG-Lichtbogenlötens ist gerätetechnisch weitgehend identisch mit dem MSG-Schweißen mit drahtförmigem Zusatzwerkstoff. Beim WIG-Löten wird der drahtförmige Zusatzwerkstoff manuell oder mechanisiert seitlich in den Lichtbogen gefördert. Der Zusatzwerkstoff kann dabei stromlos als Kaltdraht oder strombeaufschlagt als Heißdraht zugeführt werden. Mit Heißdraht werden höhere Abschmelzleistungen erreicht, aber der Lichtbogen durch das zusätzliche Magnetfeld beeinflusst.

In der Regel wird das Lichtbogen-Löten an oberflächenveredelten bzw. unbeschichteten Feinblechen eingesetzt, da unter anderem durch die niedrigere Schmelztemperatur des Lotes im Vergleich zum Schweißen eine geringere thermische Belastung der Bauteile erreicht wird, und die Beschichtung weniger geschädigt wird. Beim Lichtbogen-Löten kommt es zu keiner wesentlichen Aufschmelzung des Grundwerkstoffes.

Die Lichtbogen-Lötprozesse werden im Allgemeinen an unbeschichteten und metallisch überzogenen Blechen aus un- und niedriglegiertem Stahl im Dickenbereich bis maximal etwa 3 mm eingesetzt.

Zum Lichtbogen-Löten können üblicherweise Argon I1 oder Ar-Gemische mit Beimischungen von CO₂, O₂ oder H₂ nach DIN ISO 14175 eingesetzt werden. Beim WIG-Löten können handelsübliche WIG-Brenner verwendet werden.

Aus der EP 2 407 267 B1 und der EP 2 407 268 B1 ist ein Schweißbrenner mit einer Schutzgaszuführung, einem Brenneranschlussblock, einem an einem Ende an den Brenneranschlussblock anschließenden Brennerhals und einem am anderen Ende des Brennerhalses vorgesehenen Brennerkopf bekannt, wobei der Brennerhals ein Innenrohr, ein Außenrohr und einen zwischen dem Innenrohr und dem Außenrohr vorgesehenen Isolierschlauch aufweist.

Derartige Schweißbrenner werden im Stand der Technik unter anderem zum Metallinertgasschweißen (MIG) eingesetzt. Beispielsweise ist ein solcher Schweißbrenner in der Druckschrift DE 10 2004 008 609 A1 beschrieben. Bei diesem Schweißbrenner wird der Schweißstrom über die Kontaktdüse dem im Innenrohr befindlichen Schweißdraht zugeführt. Dabei sind die äußeren Teile des Brenners elektrisch von dem Innenrohr isoliert, um ein Fließen von Schweißströmen über das Brennergehäuse zu verhindern. Im Schweißprozess erfolgt eine Erwärmung des Schweißdrahtes und die Wärme wird teilweise in den Schweißbrenner geleitet.

Gattungsgemäß kann das im Schweißprozess ohnehin verwendete Schweißgas, das meist ein inertes Schutzgas ist, möglichst effektiv zur Kühlung des Innenrohres eingesetzt werden. Eine effektive Kühlung des Innenrohres kann erreicht werden, wenn das Gas in flachen Kanälen an der Außenseite des Innenrohres entlang strömt. Zur Erzeugung von Gasströmungskanälen außen am Innenrohr wird im Stand der Technik ein Mantelrohr auf dem Innenrohr verwendet. Der Verbund aus Innenrohr und Mantelrohr wird dann durch einen Isolierschlauch von einem äußeren Gehäuserohr isoliert.

Gattungsgemäß erfolgt die Zuführung des Schutzgases zunächst durch die Schutzgaszuführung, die typischerweise in Form einer Bohrung im Brenneranschlussblock ausgebildet ist. Da die Zuführung des Schutzgases unsymmetrisch zum Innenrohr erfolgt, soll das Schutzgas möglichst gleichmäßig um das Innenrohr herum verteilt werden. Zu diesem Zweck wird beispielsweise in der EP 2 407 267 B1 vorgeschlagen, dass der äußere Ringkanal innerhalb des Brenneranschlussblocks und um das Innenrohr ausgebildet ist, durch welchen sich das Schutzgas um das Innenrohr herum verteilen kann. Das Schutzgas strömt somit ausgehend von der Bohrung im Brenneranschlussblock über den äußeren Ringkanal und die radialen Gaskanäle zu dem Zwischenraum zwischen Innenrohr und Isolierschlauch bzw. gegebenenfalls auch zu dem Zwischenraum zwischen Isolierschlauch und Außenrohr.

Aus der EP 0 074 106 A1 ist ein wassergekühlter Schutzgas-Schweißbrenner zum Schweißen mit einer kontinuierlich schmelzenden Elektrode für automatische Schweißgeräte bekannt. Eine periodische Reinigung durch Luftausstöße soll durch die koaxiale Anordnung von zwei elektrisch voneinander isolierten äußeren Profilrohren erreicht werden, deren Nuten als Kanäle ausgebildet sind. Diese Kanäle erstrecken sich vom Brennerkopf mit der Gasdüse an einem Gasdüsenhalter zu einem Brennerkörper. Die inneren Schutzgaskanäle sollen gleichzeitig dazu dienen, während der periodischen Reinigung der Gasdüse Ausblasluft in die Gasdüse einzuspeisen. Die äußeren Wasserkanäle erstrecken sich bis zum Gasdüsenhalter, so dass dieser direkt gekühlt wird. Durch eine spezielle Ausgestaltung des Brennerkörpers und der Verbindungsteile wird Schutzgas oder Druckluft für Ausblas- und Kühlwasser den koaxial angeordneten Profilrohren zugeführt.

Aus der EP 2 487 003 A1 ist eine Schweißpistole eines Lichtbogen-Schweißgerätes bekannt, welche an einem Schweißende eine mit einer einen Durchlasskanal umgebenden Wand hülsenförmig gebildete Gasdüse und einen in der Gasdüse angeordneten Gasverteiler mit Gasausströmöffnungen aufweist. Die Gasdüse weist an einem Anschlussende im Inneren an der Innenseite der Wand eine Verbindungsstruktur auf. Bei der Gasdüse ist ferner auf der Innenseite der Wand in Richtung des Gasaustrittsendes gesehen, hinter der Verbindungsstruktur ein durchgehender, umlaufender Vorsprung gebildet, der einen gegenüber der Umgebung des Vorsprungs verringerten Querschnitt des Durchlasskanals erbringt. Darüber hinaus weist der Gasverteiler in Richtung des Gasaustrittsendes gesehen, vor den Gasausströmöffnungen einen korrespondierenden Rücksprung auf.

Nachteilig dabei ist, dass der Gasverteiler durch eine Ringnut geschützt und gehalten wird, dagegen mit diesem aber nicht fest verbunden ist. Aus diesem Grund ist keine Verliersicherung des Gasverteilers im nicht-verschraubten Zustand gegeben. Denn die Gasdüse wird auf diesen Brenner mit Drahtführung und Gasverteiler geschraubt. Demnach ist der Gasverteiler nicht verliersicher mit der Gasdüse verbunden, sondern mit dem Rest des Brenners.

Eine automatische Reinigung der in EP 2 487 003 A1 beschriebenen Gasdüse ist ebenfalls nicht möglich, da diese durch die Ringnut lediglich gehalten wird, aber nicht fest verbunden ist. Daher ist sie auch im verschraubten Zustand nicht gegen Verdrehen gesichert.

Aus der JPA 1985072679 ist ein Verfahren zum Lichtbogenschweißen bekannt. Ein Schutzgas strömt zentral aus einer in einem Innenrohr angeordneten Gasdüse. Ein auf den Brennerkörper aufsteckbarer Gasverteiler ist aus einem elektrisch isolierenden Werkstoff hergestellt.

Aus der JPU 11982152386 ist ein Brenner zum Lichtbogenschweißen mit einer abschmelzenden Elektrode bekannt, wobei das Schutzgas zentral in den Brennerhals geführt wird und durch Bohrungen in einem Gasverteiler radial austritt. Der Gasverteiler ist aus einem elektrisch isolierenden Werkstoff hergestellt.

Aus der JP H07 256462 A ist ein Schweißbrenner mit einer Spitze bekannt, welche eine Isolierverbindung sowie einen an der Isolierverbindung befestigten Strömungsstörer aufweist. An der Isolierverbindung ist eine Düse angeordnet. Ein Elektrodendraht wird von einer Elektrodendrahtzuführung zugeführt. Um die Strömung des Schutzgases zu beeinflussen ist ein zwischen der Innenwand der Düse und der Spitze angeordnetes Trenn- bzw. Ablenkteil mit der Isolierverbindung verschraubt. Das Trenn- bzw. Ablenkteil soll verhindern, dass der Brenner und die Düse durch Spritzer an der Innenwand des Brenners elektrisch kurzgeschlossen werden.

Aus der US 2017/080512 A1 ist ein Schweißbrennersystem bekannt mit einer Aufnahmebaugruppe zur Aufnahme einer Kontaktspitze und einer Schweißdüse. Das Schweißbrennersystem enthält auch ein Verriegelungselement, das die Kontaktspitze in einer teilweise sicheren Position hält. Ferner umfasst das Schweißbrennersystem die Schweißdüse, die so konfiguriert ist, dass sie mit der Aufnahmebaugruppe gekoppelt ist, um die Kontaktspitze in einer sicheren Position zu halten.

Aus der Internetseite https:/Iwww.vdma.org/en/v2viewer/-/v2article/render/15157542 (Abrufdatum: 01.12.2020) geht eine einteilige Mischdüse mit einem Strömungsdurchmesser von etwa 25 mm für das Einmischen von gasförmigen Medien in einen Flüssigkeitsstrom hervor. Für die Herstellung der Mischdüse wird ein additives Fertigungsverfahren verwendet, bei welchem das Bauteil auf der Basis eines Metallpulvers schichtweise mit Hilfe des Selective Laser Melting-Verfahrens aufgebaut wird. Durch das Verwenden eines additiven Fertigungsverfahrens ist es möglich, das Bauteil integral in einem Stück zu fertigen.

Aus der JP S 62 38772 A ist ein Schweißbrenner zum Schutzgasschweißen mit einer Kontaktspitze und einer zylindrische Düse bekannt. Die Kontaktspitze wird in einen zylindrischen Gasdiffusor eingeschraubt.

Aus der DE 602 24 140 T2 ist ein Schweißbrenner zur Verwendung beim Metallschutzgasschweißen bekannt. Der Schweißbrenner weist einen Halsabschnitt und einen Diffusor an einem ersten Ende des Halsabschnitts auf. Es erstreckt sich eine Kontaktspitze vom Diffusor. Ein Anschlussmittel befindet sich an einem zweiten Ende des Halsabschnitts und dient zum Anschließen des Halsabschnitts an eine Stromkabelanordnung. Der Halsabschnitt weist einen elektrischen Leiter und einen sich longitudinal erstreckenden Durchgang auf. Ein Gas dient zum Schützen der Schweißstellen vor einer atmosphärischen Verunreinigung, wenn die Schweißstellen unter Verwendung des Schweißbrenners hergestellt werden. Das Gas strömt von der Stromkabelanordnung längs des Durchgangs und durch Öffnungen im Diffusor aus dem Schweißbrenner heraus.

Die GB 954 767 A betrifft eine Düse für einen Schweißbrenner mit einer rohrförmigen Führung für eine draht- oder bandförmige Schweißelektrode.

Die DE 12 10 100 B (Basis für den Oberbegriff des Anspruchs 1) betrifft einen Schutzgas-Lichtbogenschweißbrenner mit einem zwischen einer Mittelelektrode und einem Düsenmantel angeordneten Ringspalt, der mittels axial gerichteten Zwischenwänden in mehrere mit einer gemeinsamen Schutzgasquelle in Verbindung stehende Strömungskanäle unterteilt ist.

Bei gattungsgemäßen Schweißbrennern, insbesondere bei MSG-Schweißbrennern findet am vorderen Ende unter anderem die Kontaktierung der Drahtelektrode mit dem Schweißpotential in der Stromdüse und die Gleichrichtung und Laminarisierung der Schutzgasströmung zum Schweißgut, insbesondere zum Werkstück, statt. Außerdem wird bei flüssigkeitsgekühlten Systemen ein Teil der Prozesswärme an den Kühlkreislauf übertragen.

Zur optimalen Kühlung der Verschleißteile, beispielsweise der Stromkontaktdüse, ist daher der Abstand von Wärmequelle, das heißt dem Schweißprozess zum Kühlkreislauf, bei Flüssigkeitskühlung, so kurz wie möglich zu gestalten. Für die Gleichrichtung und Laminarisierung der Schutzgasströmung ist eine ausreichende Verweilzeit durch eine geeignete Geometrie in der Schutzgasführung, insbesondere innerhalb der Verschleißteile erforderlich. Darüber hinaus müssen das Außen- und Innenrohr des MSG-Schweißbrenners außerdem elektrisch isoliert voneinander sein.

Beim Durchführen des Schweißprozesses kann es je nach Prozessparametern zu mehr oder weniger starken Anhaftungen von Spritzern an Verschleißteilen kommen. Diese werden bei MSG-Schweißbrennern in der Regel in automatisiert geführten Systemen über eine motorisch angetriebene Reinigungseinrichtung mit einem Fräser entfernt. Diesen mechanischen Belastungen müssen die Verschleißteile, insbesondere die Gasdüse oder die Stromkontaktdüse sowie ein Isolator, standhalten.

Bei bekannten Brennerhälsen, beispielsweise der Baureihe "ABIROB^{®} W500" der Anmelderin, kann das Schutzgas zentral im Innenrohr geführt werden. Als zentrale Gaszuführung werden solche Konstruktionen bezeichnet, bei denen das Schutzgas gemeinsam mit dem Zusatzdraht im Inneren des Innenrohres geführt werden können. Folglich kann das Innenrohr einwandig ausgeführt sein. Durch die Bohrungen im Düsenstock tritt die Schutzgasströmung radial in einen Spritzerschutz ein und in Richtung der Gasdüse aus. Der Spritzerschutz ist dabei so ausgeführt, dass zusätzlich zur Gasverteilung auch elektrisch isoliert.

Der Spritzerschutz weist bei der Reinigung der Strom- und Gasdüse, beispielsweise mit einem Fräser, ausreichend Abstand zu diesem auf, so dass er nicht beschädigt wird.

Bei weiteren bekannten Brennerhälsen, insbesondere der Baureihe "ABIROB^{®} W600" der Anmelderin, wird das Schutzgas dezentral im Innenrohr geführt. Bei einer dezentralen Gasführung wird das Schutzgas in einer Doppelwand des Innenrohres geführt. Mit anderen Worten ist das Innenrohr dann ein Verbundrohr bzw. eine kombinierte Rohr-in-Rohr-Verbindung, wobei ein Rohr profiliert ist, sodass sich Zwischenräume zwischen den beiden Rohrwänden bilden können. Durch Bohrungen im Innenrohr tritt die Schutzgasströmung radial aus. Über einen Gasverteiler gelangt das Schutzgas dann in die Gasdüse. Der Gasverteiler besteht aus einer PhenolPressmasse und wirkt als elektrischer Isolator, durch den sowohl das Schutzgas verteilt als auch die Isolation zwischen Außen und Innenrohr an den jeweiligen Rohrenden umgesetzt wird. Aus diesem Grund können die Gasbohrungen bei der Reinigung der Strom- und Gasdüse mit einem Fräser nicht mitgereinigt werden. Der Gasverteiler ist um die Drehachse des Fräsers drehbar gelagert. Dadurch wird die mechanische Belastung durch gelöste Spritzer während des Reinigungsvorgangs zwar minimiert, allerdings kann eine optimale Reinigung mittels Fräsers nicht realisiert werden. Mit anderen Worten ist durch diese Konstruktion der Einsatz (druckluftbetriebener) Fräser aber nicht möglich. Als Alternative wird hier nach Stand der Technik ein Spritzerschutz angeboten, welcher die Isolation sicherstellt, wodurch aber der positive Effekt einer laminareren Gasführung durch den Gasverteiler nicht realisiert werden kann.

Bei weiteren bekannten Brennerhälsen der Baureihe "ABIROB^{®} TWIN 600W' der Anmelderin wird das Schutzgas dezentral im Innenrohr geführt. Durch Bohrungen im Innenrohr tritt die Schutzgasströmung radial aus. Über den Gasverteiler strömt das Schutzgas axial zu einem Spritzerschutz und wird von selbigen wieder radial in die Gasdüse geleitet. Der Gasverteiler besteht aus einer Phenolpressmasse und der Spritzerschutz aus Glasfaser-Silikon. Der Gasverteiler und der Spritzerschutz sind drehbar gelagert. Die Gasbohrungen im Spritzerschutz können daher bei der Reinigung der Strom- und Gasdüse mit dem Fräser ebenfalls nicht mitgereinigt werden.

Aus dem zuvor Gesagten folgt daher, dass die baulichen Anforderungen an eine Strömungslaminarisierung und eine maximierte Prozesswärmeübertragung gegenläufig sind. Darüber hinaus ist es bei den bekannten Brennern nachteilig, dass keine automatisierte Reinigung, beispielsweise mittels eines Fräsers, möglich ist, ohne die Verschleißteile zu beschädigen. Ferner ist es bei bekannten Brennern nachteilig, dass es sich bei Gasdüse und Gasverteiler um keine Baugruppe, sondern dagegen um separate Bauteile handelt, welche insbesondere bei einem Austausch leicht verloren gehen können, da diese nicht verliersicher miteinander verbunden sind.

Ausgehend von den zuvor beschriebenen Nachteilen liegt der Erfindung die Aufgabe zugrunde, eine verbesserte Gasdüse und einen verbesserten Brennerhals anzugeben, welche die automatisierte Reinigung des Brenners, insbesondere mittels eines Fräsers auch dann zu ermöglichen, wenn die Gasführung für einen laminar fließenden Schutzgasstrom dezentral, d. h. durch Kanäle innerhalb eines (Verbund-) Innenrohres geführt wird.

Diese Aufgabe wird gelöst mit einer Gasdüse zum Ausströmen eines Schutzgasstromes nach Anspruch 1 und einem Brennerhals zum thermischen Fügen wenigstens eines Werkstücks, insbesondere zum Lichtbogenfügen, vorzugsweise zum Lichtbogenschweißen oder Lichtbogenlöten gemäß Anspruch 10 sowie mit einem Brenner mit einem derartigen Brennerhals gemäß Anspruch 14 und einem Verfahren zum thermischen Fügen wenigstens eines Werkstückes gemäß Anspruch 15.

### Darstellung der Erfindung

Gemäß der Erfindung ist eine Gasdüse zum Ausströmen eines Schutzgasstromes aus einem Gasaustritt mit einem Gasverteilerabschnitt vorgesehen, wobei die Gasdüse wenigstens in einem Teilbereich des Gasverteilerabschnitts doppelwandig zur Bildung eines Strömungsraums für den Schutzgasstrom ausgebildet ist.

Auf diese Weise wird ein zusätzlich abgegrenzter Strömungsraum bzw. ein Hohlraum innerhalb der Baugruppe, d. h. zwischen Gasdüse und Gasverteilerabschnitt, bzw. die Übergänge zu diesem oder aus diesem Strömungsraum bereitgestellt.

Der Strömungskanal für den Schutzgasstrom ist durch die Umlenkung des Schutzgasstroms in dem doppelwandigen Gasverteilerabschnitt verlängert, so dass sich die gewünschte laminare Strömung am Vorderende des Brennerkopfes einstellt und dies trotz gegenüber bekannten Systemen verkürzter Gasdüse für eine maximierte Prozesswärmeübertragung.

Die Gasdüse ist gegenüber bekannten Düsen verkürzt, um die Flüssigkeitskühlung so nah wie möglich an die Wärmequelle (Schweißprozess) zu verorten, d.h. der Abstand von Wärmequelle zu Kühlkreislauf ist so kurz wie möglich.

Bei dezentraler Gasverteilung kann die Verteilung und Laminarisierung der Schutzgasströmung in der Gasdüse nicht mehr über das Innenrohr bzw. den Düsenstock realisiert werden. Ferner können die Bohrungen der separaten Gasverteilung nicht mechanisch mittels eines Fräsers gereinigt werden. Auf diese Weise kann sich die laminare Strömung am Vorderende des Brennerkopfes auch bei der verkürzten Gasdüse ausbilden. Aufgrund der erfindungsgemäßen Ausgestaltung der Gasdüse mit zusätzlich abgegrenztem Strömungsraum innerhalb der Baugruppe, d.h. zwischen Gasdüse und Gasverteilerabschnitt, ist es bei minimalem Abstand von Prozesswärmequelle zu Kühlkreislauf ermöglicht, die Schutzgasströmung zu laminarisieren und gleichzeitig die Gasbohrungen des integrierten Gasverteilers mit dem Fräser automatisiert zu reinigen. Mit anderen Worten ist der Brenner unempfindlich gegenüber der automatisierten Reinigung mittels Fräsers.

Gemäß einer ersten vorteilhaften Weiterbildung der Erfindung sind der Gasverteilerabschnitt und die Gasdüse monolithisch ausgebildet. Beispielsweise kann die Gasdüse mit Gasverteilerabschnitt mittels 3D-Drucks auf besonders einfache und effiziente Weise hergestellt werden.

Alternativ ist es denkbar, dass der Gasverteilerabschnitt durch einen an der Gasdüse befestigten Gasverteiler gebildet ist. Auf diese Weise bilden die Gasdüse und der Gasverteiler eine Baugruppe. Darüber hinaus ist eine Verliersicherung realisiert, indem der Gasverteilerabschnitt verliersicher mit der Gasdüse verbunden ist. Insbesondere beim Austausch der Gasdüse, d.h. im auch im nicht am Brenner verschraubten Zustand, ist der Gasverteiler verliersicher an der Gasdüse gehalten. Erfindungsgemäß ist es vorgesehen, dass der Gasverteilerabschnitt umfangseitig mehrere etwa im gleichen Abstand zueinander angeordnete Gasauslassöffnungen aufweist, so dass der Gasaustritt mit den Gasauslassöffnungen in einer Fluidverbindung steht. Durch diese Gasauslassöffnungen strömt entsprechend der radialen Verteilung der Öffnungen das Schutzgas über den Umfang gleichmäßig verteilt aus. Das durch die Öffnungen austretende Gas wird somit in der Gasdüse abgelenkt und umgeleitet, so dass sich ein im Hinblick auf die Laminarität verbesserter Gasstrom des Schutzgases in Richtung des Gasauslasses ergibt.

Aus diesem Grund ist es vorteilhaft, die Gasauslassöffnungen in einem zusätzlichen, an der Gasdüse angebrachten Bauteil anzuordnen, welches unempfindlich gegenüber einer Reinigung mittels eines Fräsers ist. Gleichzeitig bildet die Baugruppe aus Gasdüse und dem zusätzlichen Bauteil eine Verlängerung des Strömungskanals für das Schutzgas, in welcher sich die am Vorderende des Brennerhalses gewünschte laminare Strömung bereits ausbilden kann.

In einer vorteilhaften Weiterbildung der Erfindung ist der durch die Gasdüse und die anschließende Gasverteilerabschnittsfläche definierte Innendurchmesser der Gasdüse stromabwärts des Gasstroms gleichbleibend oder in Strömungsrichtung konisch zulaufend, d.h. verengend, ausgebildet. Auf diese Weise kann der, insbesondere maschinell geführte Fräser problemlos in die Gasdüse eingeführt und bis zu den Gasauslassöffnungen gefahren werden, so dass eine einfache Reinigung der Gasdüse und der Gasauslassöffnungen realisiert wird.

Eine weitere vorteilhafte Variante der Erfindung sieht vor, dass der Gasverteiler aus einem metallischen Werkstoff, insbesondere Kupfer oder einer Kupferlegierung besteht oder aber auch aus einer Keramik hergestellt ist. Ein metallischer Werkstoff ist dabei allerdings besonders vorteilhaft, da die Gasauslassöffnungen bei gewöhnlichen Keramik- oder Polymerwerkstoffen nicht automatisiert mit einem Fräser gereinigt werden können. Moderne zerspanbare Glaskeramiken können zwar ebenfalls eingesetzt, sind aber in der Regel sehr teuer und nur aufwändig zu verpressen.

Aus diesem Grund ist zumindest der Gasverteilerabschnitt der Gasdüse vorzugsweise aus einem metallischen Werkstoff gefertigt, um die automatisierte Reinigung der Gasbohrungen, insbesondere auch bei einer dezentral geführten Gasverteilung zu ermöglichen. Darüber hinaus sind bei einem metallischen Werkstoff beim Fräsen aufgrund der hohen Schlagfestigkeit Beschädigungen sehr unwahrscheinlich. Eine hohe Härte des Materials ist erforderlich, um den Abrasionskräften bei der Fräserreinigung zu widerstehen. Im Sinne der Erfindung ist auch eine Umsetzung mit schlagfesten, harten und temperaturfesten nichtmetallischen Werkstoffen denkbar.

In einer Weiterbildung der Erfindung fügt sich der Gasverteiler zumindest abschnittsweise im Wesentlichen bündig an die Gasdüse an. Auf diese Weise kann der, insbesondere maschinell geführte Fräser problemlos in die Gasdüse eingeführt und bis zu den Gasauslassöffnungen gefahren werden, so dass eine optimale Reinigung möglich ist. Die inneren Bauteile, insbesondere die Stromkontaktdüse und deren Halter müssen dazu nicht verändert werden.

Gemäß einer weiteren vorteilhaften Ausgestaltung der Erfindung ist der Gasverteiler mit der Gasdüse form- und/oder kraft- und/oder stoffschlüssig verbunden.

Unter kraftschlüssigen bzw. reibschlüssigen Verbindungen wird verstanden, dass diese darauf beruhen, dass Verbindungselemente Kräfte übertragen, indem sie ein Aufeinanderpressen der Fügeoberflächen bewirken. Zwischen den Flächen entsteht ein Reibungswiderstand, der größer ist als die von außen auf die Verbindung einwirkenden Kräfte. Bei einer kraftschlüssigen Verbindung werden Kräfte und Momente durch Reibungskräfte übertragen.

Formschlüssige Verbindungen werden dadurch bewirkt, dass die Form der zu verbindenden Werkstücke oder der Verbindungselemente die Kraftübertragung ermöglicht und damit den Zusammenhalt schafft. Formschlüssige Verbindungen entstehen durch das Ineinandergreifen von mindestens zwei Verbindungspartnern. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg. Beim Formschluss werden Werkstücke durch ineinanderpassende Formen verbunden.

Stoffschlüssige Verbindungen entstehen durch Vereinigung von Werkstoffen, d.h., die Werkstücke werden durch Kohäsion (Zusammenhangskraft) und Adhäsion (Anhangskraft) miteinander verbunden. Mit anderen Worten werden die Verbindungspartner durch atomare oder molekulare Kräfte zusammengehalten. Sie sind gleichzeitig nicht lösbare Verbindungen, die sich nur durch Zerstörung der Verbindungsmittel trennen lassen, wie beispielsweise Löten, Schweißen, Kleben oder Vulkanisieren.

Gemäß einer weiteren vorteilhaften Variante der Erfindung ist vorgesehen, dass der Gasverteiler mit der Gasdüse lösbar verbunden, insbesondere verschraubt oder eingepresst ist. Alternativ kann vorgesehen sein, dass der Gasverteiler mit der Gasdüse fest verbunden, insbesondere verklebt, verlötet oder in die Gasdüse eingepresst ist. Auf diese Weise wird eine form- und/oder kraftschlüssige Verbindung des Gasverteilers zu einem Schweißbrenner realisiert. Im Übrigen wird unter lösbaren Verbindungen verstanden, dass diese sich trennen lassen, ohne dass ein Bauteil oder das Verbindungselement zerstört wird. Dagegen lassen sich unlösbare Verbindungen nur trennen, indem das Bauteil oder das Verbindungselement zerstört wird.

Ferner kann der Gasverteiler ringförmig, rotationssymmetrisch oder geschlitzt ausgebildet sein. Vorzugsweise werden acht rotationssymmetrische Austrittsöffnungen verwendet und der Gasverteiler wird über eine Rändelfläche am Außenumfang des Gasverteilers in die Gasdüse eingepresst. Vorteile der Ausführung mit acht Bohrungen ist es, dass damit genügend "Staufläche" für Schutzgas vorhanden ist, gleichzeitig aber acht Austrittsöffnungen ausreichend sind, um den notwendigen Volumenstrom für einen stabilen Fügeprozess zu erreichen.

Nach einem eigenständigen Gedanken der Erfindung ist ein Brennerhals zum thermischen Fügen wenigstens eines Werkstücks, insbesondere zum Lichtbogenfügen, vorzugsweise zum Lichtbogenschweißen oder Lichtbogenlöten vorgesehen, mit einer im Brennerhals angeordneten Elektrode oder einem Draht zum Erzeugen eines Lichtbogens zwischen der Elektrode oder dem Draht und dem Werkstück. Darüber hinaus weist der Brennerhals eine Gasdüse zum Ausströmen eines Schutzgasstromes aus einem Gasaustritt auf. Bei dieser Gasdüse kann es sich um eine oben beschriebene Gasdüse handeln.

Wie oben erwähnt, kann es bei Schweißbrennern, insbesondere bei Maschinenbrennern, beim Schweißprozess zu Verunreinigungen an der Gasdüse und an den Gasauslassöffnungen kommen. Diese verunreinigten Bauteile werden mittels eines Fräsers gereinigt und auf diese Weise von Schweißspritzern befreit. Die Verschleißteile, insbesondere die Gasdüse, die Stromkontaktdüse oder eine Isolation, müssen folglich den mechanischen Belastungen bei Fräsen standhalten.

Beim Stand der Technik befinden sich diese Gasauslassöffnungen an einem Polymer- oder Keramikwerkstoffteil, welches gleichzeitig zur elektrischen Isolierung zwischen Innen- und Außenrohr des Brennerkopfes dient. Nachteilig dabei ist, dass der Fräser zur Reinigung nicht bis an das jeweilige Polymer- oder Keramikwerkstoffbauteil heranreicht. Zum anderen wäre die Gefahr einer Beschädigung der Verschleißteile durch den Fräser viel zu groß.

Bei dem erfindungsgemäßen Brennerhals werden diese Nachteile vermieden. Insbesondere bei Brennern mit einem Innen- und Außenrohr kann die Strom- und Prozesswärmeübertragung nur über das Innenrohr geführt werden. Daher ist es günstig, die Schutzgasströmung über das Außenrohr oder zwischen Außen- und Innenrohr zu leiten. Um die Zeit für Strömungslaminarisierung am vorderen Brennerende zu erhöhen, sind die zusätzlichen Querschnitts- und Strömungsrichtungsänderungen aufgrund der Geometrie der Gasdüse vorgesehen.

Aufgrund der Ausgestaltung des Brennerhalses mit entsprechender Geometrie der Gasdüse mit Gasverteilerabschnitt und Gasautrittsöffnungen, wobei die Gasdüse wenigstens in einem Teilbereich des Gasverteilerabschnitts doppelwandig zur Bildung eines Strömungsraums für den Schutzgasstrom ausgebildet ist, findet daher auch bei geringem Abstand von Wärmequelle eine ausreichende Verweilzeit für die Gleichrichtung und Laminarisierung der Schutzgasströmung durch die geeignete Geometrie.

Gemäß einer ersten vorteilhaften Ausgestaltung der Erfindung isoliert ein elektrischer Isolator ein mit einer Stromkontaktdüse elektrisch verbundenes Innenrohr des Brennerhalses gegenüber einem vom Innenrohr beabstandetem Außenrohr des Brennerhalses elektrisch.

In den bekannten Brennern wird ein isolierter Gasverteiler eingesetzt, durch den sowohl das Schutzgas verteilt als auch die Isolation zwischen Außen- und Innenrohr an den jeweiligen Rohrenden umgesetzt wird. Durch diese Konstruktion ist die automatisierte Reinigung, insbesondere durch den Einsatz druckluftbetriebener Fräser nicht möglich. Als Alternative wird hier nach Stand der Technik ein Spritzerschutz angeboten, welcher die Isolation sicherstellt, aber dadurch der positive Effekt einer laminareren Gasführung durch den Gasverteiler dagegen nicht realisiert werden kann.

Bei einer dezentralen Gasführung wird das Schutzgas in einer Doppelwand des Innenrohres geführt. Damit ist das Innenrohr eigentlich ein Verbundrohr bzw. eine kombinierte Rohr-in-Rohr-Verbindung, wobei ein Rohr profiliert ist, sodass sich Zwischenräume zwischen den beiden Rohrwänden bilden.

Die elektrische Isolation erfolgt zwischen dem Innenrohr und dem Außenrohr, vorzugsweise mit einer Abdeckung am Ende beider Rohre. Dabei sind die äußeren Teile des Brenners elektrisch von dem Innenrohr isoliert, um ein Fließen von Schweißströmen über das Brennergehäuse zu verhindern. Im Schweißprozess erfolgt eine Erwärmung des Schweißdrahtes und die Wärme wird teilweise in den Schweißbrenner geleitet.

Es kann vorgesehen sein, die Isolation so auszuführen, dass sie funktionsgetrennt von der Gasführung ist. Das Verschleißteil für die elektrische Isolation zwischen Innen- und Außenrohr kann einfacher und damit günstiger gestaltet werden. Darüber hinaus ist der Einsatz des Fräsers zur Reinigung ohne Beschädigung der Verschleißteile möglich.

Durch die Trennung von Isolation und Strömungsführung beim Spritzerschutz kann die Isolation, beispielsweise in Form einer Abdeckung und einem Distanzstück am Ende der vorderen Rohrenden des Innen- und Außenrohres in Form des Gasdüsenträgers konstruktiv deutlich einfacher und dickwandig gestaltet werden. Dies bedeutet, dass sich insbesondere die Crashsicherheit, d. h. Positionsstabilität des Brennerhalses bei schlagartiger mechanischer Beanspruchung, insbesondere bei einer Kollision des Schweißbrenners mit dem Werkstück, deutlich verbessert und ein nicht isolierender Gasverteiler bzw. Gasverteilerabschnitt in der Gasdüse implementiert werden kann.

In einer weiteren vorteilhaften Weiterbildung des erfindungsgemäßen Brennerhalses ist ein Filterring aus Sintermaterial zur Druckminderung vorgesehen, wobei der Filterring in der Gasdüse stromabwärts innerhalb des in einem Teilbereich doppelwandig ausgebildeten Gasverteilerabschnitts angeordnet ist. Durch die Verkürzung der Gasdüse kann es vorkommen, dass die Verweilzeit des Schutzgases in der Düse nicht mehr ausreicht, um eine Laminarisierung des Gases zu gewährleisten. Aus diesem Grund ist der Filterring aus Sintermaterial zur Druckminderung vorgesehen.

Gemäß einer weiteren vorteilhaften Ausgestaltung der Erfindung ist ein Spritzerschutz zum Schutz vor Schweißspritzern vorgesehen. Über den Gasverteiler bzw. den Gasverteilerabschnitt strömt das Schutzgas axial zum Spritzerschutz und wird von selbigem wieder radial in die Gasdüse geleitet. Der Spritzerschutz besteht vorzugsweise aus einem temperaturbeständigen Isolator, wie glasfasergefülltem PTFE und hat bei der Reinigung der Strom- und Gasdüse mit dem Fräser ausreichend Abstand zu selbigem, so dass der Spritzerschutz durch den Fräser nicht beschädigt wird.

Nach einem weiteren eigenständigen Gedanken der Erfindung ist ein Brenner mit einem Brennerhals, insbesondere mit einem oben beschriebenen Brennerhals vorgesehen.

Gemäß einem weiteren eigenständigen Gedanken der Erfindung ist ein Verfahren zum thermischen Fügen von wenigstens einem Werkstück, insbesondere zum Lichtbogenfügen, vorzugsweise zum Lichtbogenschweißen oder Lichtbogenlöten, mit einer Elektrode zum Erzeugen eines Lichtbogens zwischen der Elektrode und dem Werkstück vorgesehen. Ein Schutzgasstrom strömt aus einer Gasdüse, insbesondere nach einer oben beschriebenen Gasdüse aus. Die Strömungsrichtung des Schutzgasstroms wird mittels eines Gasverteilerabschnitts bzw. eines Gasverteilers wenigstens einmal geändert, so dass die Strömungsdauer bzw. der Strömungsweg des Schutzgasstromes innerhalb der Gasdüse verlängert wird, wobei der Schutzgasstrom die Elektrode am Gasaustritt der Gasdüse im Wesentlichen ringförmig umgibt.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: einen Teil eines Brennerhalses eines Schweißbrenners mit einer Gasdüse,
- Figur 2: eine Detailansicht der Gasdüse mit einem Gasverteilerabschnitt,
- Figur 3: eine Detailansicht der Gasdüse, wobei der Gasverteilerabschnitt und die Gasdüse monolithisch ausgebildet sind,
- Figur 4: eine Schnittdarstellung des Brennerhalses gemäß Fig. 1 und
- Figur 5: einen Teil eines Brennerhalses gemäß Fig. 1 und 7 einem Fräser.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

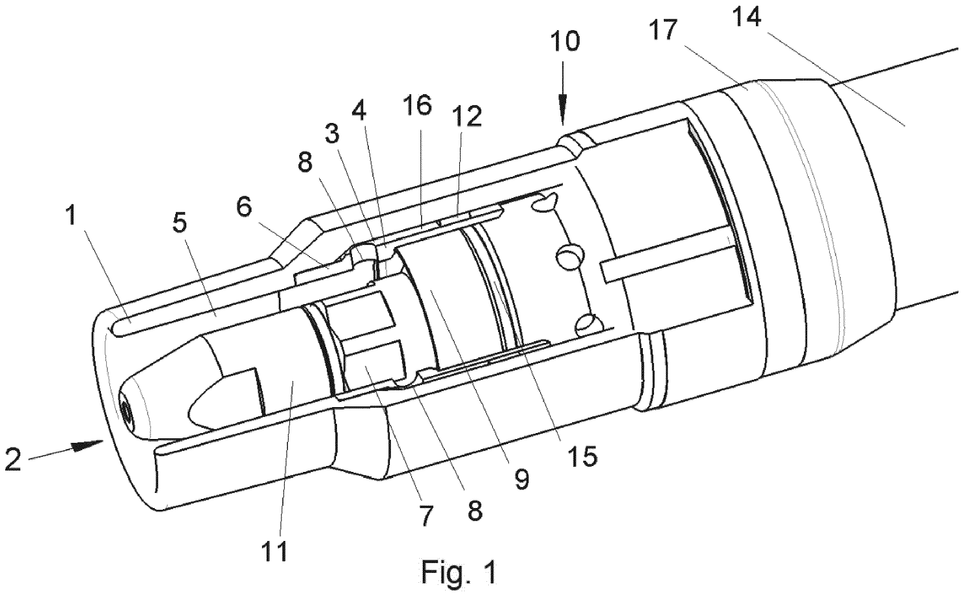

Aus Fig. 1 geht ein Brennerhals 10 mit einem Düsenstock 7 eines Schweißbrenners zum thermischen Fügen wenigstens eines Werkstücks, insbesondere zum Lichtbogenfügen, vorzugsweise zum Lichtbogenschweißen oder zum Lichtbogenlöten hervor. In der Blechfertigung kommen standardmäßig "MIG", "MAG" sowie "WIG"-Schweißen zum Einsatz.

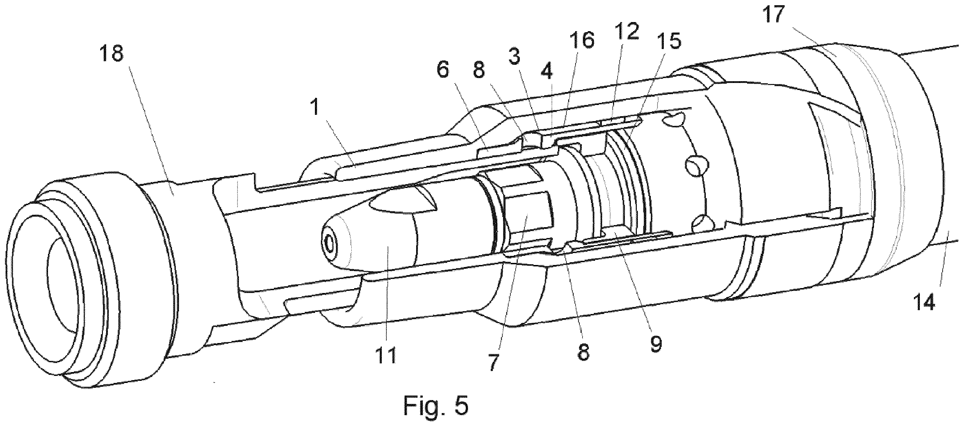

Fig. 5 unterscheidet sich von Fig. 1 dadurch, dass zusätzlich noch ein Fräser 18 angedeutet ist.

Bei den schutzgasunterstützten Lichtbogenschweißverfahren mit abschmelzender Elektrode (MSG) steht "MIG" für "Metall-Inertgas", und "MAG" für "Metall-Aktivgas". MAG-Schweißen ist ein Metall-Schutzgasschweiß-Prozess (MSG) mit Aktivgas, bei dem der Lichtbogen zwischen einer kontinuierlich zugeführten, abschmelzenden Drahtelektrode und dem Werkstoff brennt. Die abschmelzende Elektrode liefert den Zusatzwerkstoff zur Bildung der Schweißnaht.

Bei schutzgasunterstützten Lichtbogenschweißverfahren mit nicht-abschmelzender Elektrode (WSG) steht "WIG" für "Wolfram-Inertgas". Die erfindungsgemäßen Schweißvorrichtungen können als maschinengeführter Schweißbrenner ausgeführt sein.

Lichtbogenschweißvorrichtungen erzeugen zum Aufschmelzen des Schweißgutes einen Lichtbogen zwischen dem Werkstück und einer abschmelzenden oder nicht abschmelzenden Schweißelektrode. Das Schweißgut sowie die Schweißstelle werden von einem Schutzgasstrom gegenüber den Atmosphärengasen, hauptsächlich N2, O2, H2, der Umgebungsluft abgeschirmt.

Dabei ist die Schweißelektrode an einem Brennerkörper eines Schweißbrenners vorgesehen, der mit einem Lichtbogenschweißgerät verbunden ist. Der Brennerkörper enthält gewöhnlich eine Gruppe von innenliegenden, schweißstromführenden Bauteilen, die den Schweißstrom von einer Schweißstromquelle in dem Lichtbogenschweißgerät zur Spitze des Brennerkopfes auf die Schweißelektrode leiten, um dann von dort aus den Lichtbogen zum Werkstück zu erzeugen.

Der Schutzgasstrom umströmt die Schweißelektrode, den Lichtbogen, das Schweißbad und die Wärmeeinflusszone am Werkstück und wird diesen Bereichen dabei über den Brennerkörper des Schweißbrenners zugeführt. Eine Gasdüse 1 leitet den Schutzgasstrom zum Vorderende des Brennerkopfes, wo der Schutzgasstrom etwa ringförmig um die Schweißelektrode aus dem Brennerkopf austritt.

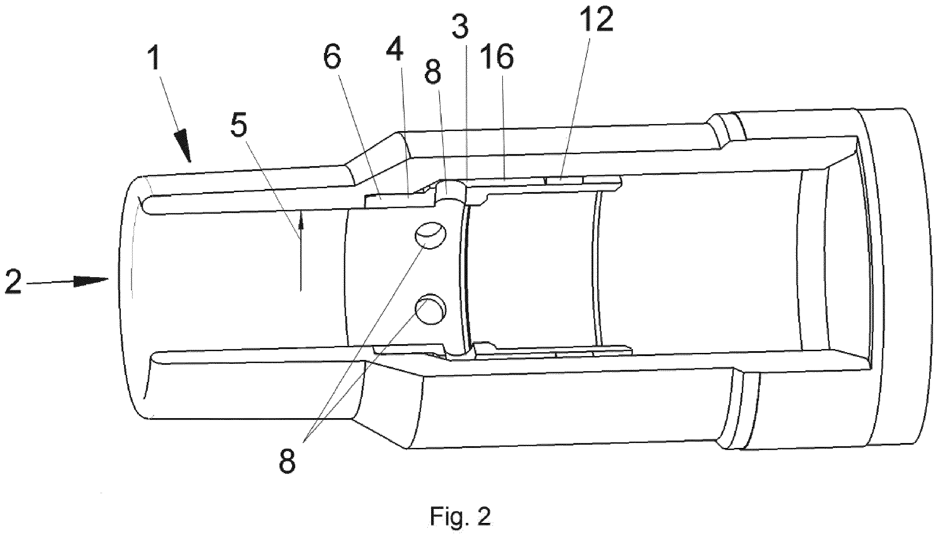

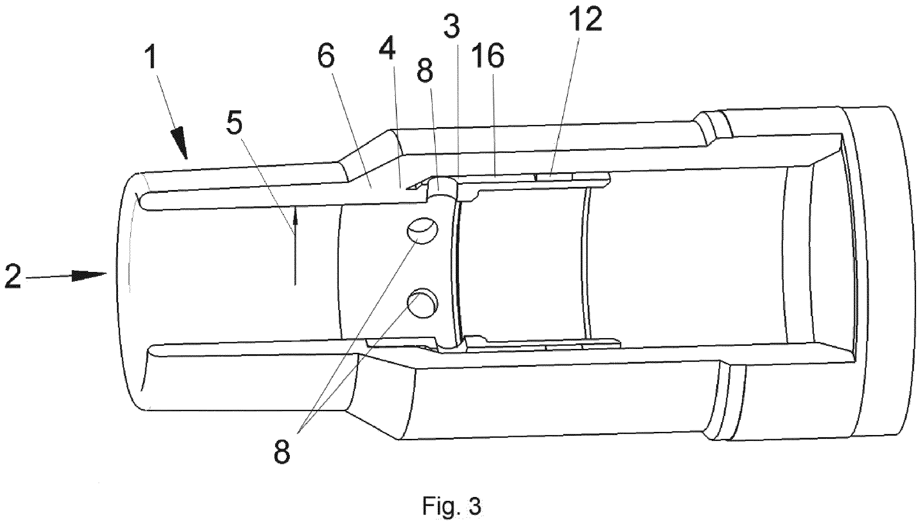

Der in Figuren 1 und 5 dargestellte Brennerhals 10 des Brennerkopfes des Schweißbrenners weist im vorliegenden Ausführungsbeispiel die Gasdüse 1 zum Ausströmen eines Schutzgasstroms aus einem am vorderen Ende der Gasdüse 1 vorgesehenen Gasaustritt 2 auf. Derartige Gasdüsen 1 sind detailliert in den Fig. 2 und 3 dargestellt.

Aus den Fig. 1 bis 3 und 5 ist weiter ersichtlich, dass die Gasdüse 1 wenigstens in einem Teilbereich eines Gasverteilerabschnitts 3 doppelwandig zur Bildung eines Strömungsraums 16 für den Schutzgasstrom ausgebildet ist. Aufgrund der Ausgestaltung des Brennerhalses 10 mit entsprechender Geometrie der Gasdüse 1 mit Gasverteilerabschnitt 3 und Gasauslassöffnungen 8 ist daher auch bei geringem Abstand zur Wärmequelle eine ausreichende Verweilzeit für die Gleichrichtung und Laminarisierung der Schutzgasströmung gewährleistet.

Die Ausgestaltungen der Gasdüse 1 gemäß Fig. 2 und Fig. 3 unterscheiden sich dadurch, dass der Gasverteilerabschnitt 3 und die Gasdüse 1 gemäß Fig. 3 monolithisch ausgebildet sind. Beispielsweise kann die Gasdüse 1 mit Gasverteilerabschnitt 3 mittels 3D-Drucks hergestellt werden.

Dagegen zeigt Fig. 2, dass der Gasverteilerabschnitt 3 durch einen an der Gasdüse 1 angeordneten Gasverteiler 4 gebildet ist. Auf diese Weise bilden die Gasdüse 1 und der Gasverteiler 4 eine Baugruppe.

Bei beiden Ausgestaltungen der Gasdüse 1 gemäß Fig. 2 und Fig. 3 weist der Gasverteilerabschnitt 3 umfangseitig mehrere etwa im gleichen Abstand zueinander angeordnete Gasauslassöffnungen 8 auf, so dass der Gasaustritt 2 mit den Gasauslassöffnungen 8 in einer Fluidverbindung steht.

Der Schutzgasstrom strömt durch diese Gasauslassöffnungen 8 entsprechend der radialen Verteilung der Öffnungen 8 über den Umfang gleichmäßig verteilt aus. Der durch die Gasauslassöffnungen 8 austretende Schutzgasstrom wird somit in der Gasdüse 1 abgelenkt und umgeleitet, so dass sich ein im Hinblick auf die Laminarität verbesserter Gasstrom des Schutzgases in Richtung des Gasauslasses 2 ergibt.

Die Baugruppe aus Gasdüse 1 und Gasverteiler 4 bzw. Gasverteilerabschnitt 3 bildet eine Verlängerung des Strömungskanals für den Schutzgasstrom, in welcher sich die am Vorderende des Brennerhalses gewünschte laminare Strömung bereits ausbilden kann.

Wie aus den Fig. 1 bis 5 ferner hervorgeht, ist der durch die Gasdüse 1 und die anschließende Gasverteilerabschnittsfläche 6 definierte Innendurchmesser 5 der Gasdüse 1 stromabwärts des Schutzgasstroms gleichbleibend oder in Strömungsrichtung konisch zulaufend, d.h. verengend, ausgebildet. Bei Schweißbrennern, insbesondere bei Maschinenbrennern, kann es beim Schweißprozess zu Verunreinigungen an der Gasdüse 1 und an den Gasauslassöffnungen 8 kommen. Diese verunreinigten Bauteile werden automatisiert mittels eines Fräsers 18 gereinigt und auf diese Weise von Schweißspritzern befreit. Die Verschleißteile, insbesondere die Gasdüse 1, die Stromkontaktdüse 11 oder der Spritzerschutz 9 müssen folglich den mechanischen Belastungen beim Fräsen standhalten. Ein derartiger Fräser 18 ist in Fig. 5 dargestellt.

Durch die Ausgestaltung des Innendurchmessers 5 der Gasdüse 1 kann der maschinell geführte Fräser 18 problemlos in die Gasdüse 1 eingeführt und bis zu den zu reinigenden Gasauslassöffnungen 8 gefahren werden. Aus diesem Grund ist der an der Gasdüse 1 angeordnete Gasverteiler 4 bzw. der Gasverteilerabschnitt 3 unempfindlich gegenüber einer Reinigung mittels eines Fräsers 18.

Bei der mehrteiligen Ausgestaltung der Gasdüse 1 mit Gasverteiler 4 gemäß Fig. 2 fügt sich der Gasverteiler 4 zumindest abschnittsweise im Wesentlichen bündig an die Gasdüse 1 an. Auf diese Weise ist eine optimale Reinigung der Gasdüse 1 möglich ist. Die inneren Bauteile, insbesondere die Stromkontaktdüse 11 und deren Halter müssen dazu nicht verändert werden. Somit ist eine automatisierte Reinigung mittels Fräsers 18 leicht möglich.

Bei der Ausgestaltung der Gasdüse 1 gemäß Fig. 2 ist der Gasverteiler 4 mit der Gasdüse 1 form- und/oder kraft- und/oder stoffschlüssig verbunden. Insbesondere kann vorgesehen sein, dass der Gasverteiler 4 mit der Gasdüse 1 lösbar verbunden, insbesondere verschraubt oder eingepresst ist. Alternativ ist es denkbar, dass der Gasverteiler 4 mit der Gasdüse 1 fest verbunden, insbesondere verklebt, verlötet oder in die Gasdüse 1 eingepresst ist.

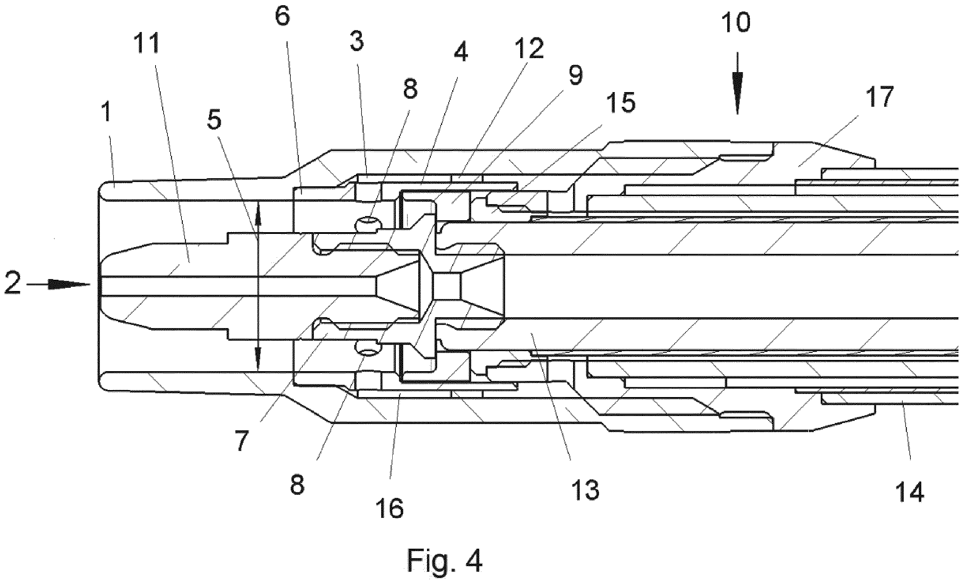

Wie aus der Schnittdarstellung des Brennerhalses 10 gemäß Fig. 4 sowie auch aus Fig. 1 und Fig. 5hervorgeht, isoliert die Isolationskappe 15 ein mit einer Stromkontaktdüse 11 elektrisch verbundenes Innenrohr 13 des Brennerhalses 10 gegenüber einem vom Innenrohr 13 beabstandetem Außenrohr 14 des Brennerhalses 10 elektrisch, vorzugsweise mit einer Abdeckung am Ende beider Rohre 13 und 14. Die äußeren Teile des Brenners bzw. des Brennerhalses 10 sind elektrisch von dem Innenrohr 13 isoliert, um ein Fließen von Schweißströmen über das Brennergehäuse zu verhindern.

Vorliegend übernimmt der Gasdüsenträger 17 neben der Funktion als Träger der Gasdüse 1 auch die Funktion der Schutzgasverteilung. Daher können sowohl der Spritzerschutz 9 als auch die Isolationskappe 15 funktionsgetrennt von der Schutzgasführung ausgeführt werden. Der Spritzerschutz 9 kann daher vollwandig und folglich stabiler als bei konventionellen Konstruktionen ausgeführt werden, in denen durch eine Bohrung Schutzgas durch den Spritzerschutz geführt wird. Die Isolationskappe 15 hat hingegen ausschließlich die Aufgabe der Positionierung der Rohre und der Isolation, muss allerdings keinen Mediendurchfluss abdichten.

Der Schutzgasstrom wird in einer Doppelwand des Innenrohres 13 geführt. Durch die Trennung von elektrischer Isolation 15 und Strömungsführung des Schutzgases kann die elektrische Isolation, beispielsweise in Form einer Abdeckung und einem Distanzstück am Ende der vorderen Rohrenden des Innen- 13 und Außenrohres 14 ausgebildet sein.

Wie aus Fig. 1, Fig. 4 und Fig. 5 weiter hervorgeht, ist ein Spritzerschutz 9 zum Schutz vor Schweißspritzern beim Schweißvorgang vorgesehen. Der Schutzgasstrom strömt über den Gasverteiler 4 bzw. den Gasverteilerabschnitt 3 axial zum Spritzerschutz 9 und wird von selbigem wieder radial in die Gasdüse 1 geleitet. Der Spritzerschutz 9 besteht vorzugsweise aus glasfasergefülltem PTFE und hat bei der Reinigung der Stromkontaktdüse 11 und der Gasdüse 1 mit dem Fräser 18 ausreichend Abstand zum Fräser 18, so dass auch der Spritzerschutz 9 durch den Fräser 18 nicht beschädigt wird.

Vorliegend erfüllt der Spritzerschutz 9 eine Doppelfunktion, indem er nicht nur zum Schutz vor Schweißspritzern vorgesehen ist, sondern auch die Funktion des elektrischen Isolators 15 übernimmt. Auf diese Weise wird durch ein einziges Bauteil, nämlich den Spritzerschutz 9 bzw. den elektrischen Isolator 15, eine Doppelfunktion erfüllt.

Durch die Verkürzung der Gasdüse 1 kann es vorkommen, dass die Verweilzeit des Schutzgasstromes in der Gasdüse 1 nicht mehr ausreicht, um eine Laminarisierung des Schutzgases zu gewährleisten. Aus diesem Grund ist ein Filterring 12 aus Sintermaterial zur Druckminderung vorgesehen. Der Filterring 12 ist in der Gasdüse 1 stromabwärts innerhalb des in einem Teilbereich doppelwandig ausgebildeten Gasverteilerabschnitts 3 angeordnet.

### Bezugszeichenliste

- 1: Gasdüse
- 2: Gasaustritt
- 3: Gasverteilerabschnitt
- 4: Gasverteiler
- 5: Innendurchmesser
- 6: Gasverteilerabschnittsfläche
- 7: Düsenstock
- 8: Gasauslassöffnung
- 9: Spritzerschutz
- 10: Brennerhals
- 11: Stromkontaktdüse
- 12: Filterring
- 13: Innenrohr
- 14: Außenrohr
- 15: Isolationskappe
- 16: Strömungsraum
- 17: Gasdüsenträger
- 18: Fräser

## Patentansprüche

1. Gasdüse (1) zum Ausströmen eines Schutzgasstromes aus einem Gasaustritt (2) der Gasdüse (1) mit einem Gasverteilerabschnitt (3), wobei die Gasdüse (1) wenigstens in einem Teilbereich des Gasverteilerabschnitts (3) doppelwandig zur Bildung eines Strömungsraums (16) für den Schutzgasstrom ausgebildet ist, **dadurch gekennzeichnet, dass**:
in Richtung der Gasströmung gesehen, der Gasverteilerabschnitt (3 eine Gaseinlassöffnung, einen doppelwandigen Teil und danach in diesem doppelwandigen Teil umfangseitig mehrere etwa im gleichen Abstand zueinander angeordnete Gasauslassöffnungen (8) aufweist, so dass der Gasaustritt (2) mil den Gasauslassöffnungen (8) in einer Fluidverbindung steht.

2. Gasdüse (1) nach Anspruch 1, **dadurch gekennzeichnet, dass** der Gasverteilerabschnitt (3) und die Gasdüse (1) monolithisch ausgebildet sind.

3. Gasdüse (1) nach Anspruch 1, **dadurch gekennzeichnet, dass** der Gasverteilerabschnitt (3) durch einen an der Gasdüse (1) befestigten Gasverteiler (4) gebildet ist.

4. Gasdüse (1) nach einem der Ansprüche 1 bis 3, **dadurch gekennzeichnet, dass** der durch die Gasdüse (1) und eine anschließende Gasverteilerabschnittsfläche (6) definierte Innendurchmesser (5) der Gasdüse (1) stromabwärts des Gasstroms gleichbleibend oder in Strömungsrichtung konisch zulaufend ausgebildet ist.

5. Gasdüse (1) nach einem der vorherigen Ansprüche, **dadurch gekennzeichnet, dass** der Gasverteiler (4) aus einem metallischen Werkstoff, insbesondere Kupfer oder Kupferlegierungen, insbesondere CuCrZr, CuDHP, oder auch aus schlagfesten Glaskeramiken besteht.

6. Gasdüse (1) nach einem der vorherigen Ansprüche, **dadurch gekennzeichnet, dass** sich der Gasverteilerabschnitt (3) bzw. der Gasverteiler (4) zumindest abschnittsweise im Wesentlichen bündig an die Gasdüse (2) anfügt.

7. Gasdüse (1) nach Anspruch 3, **dadurch gekennzeichnet, dass** der Gasverteiler (4) mit der Gasdüse (1) form- und/oder kraft- und/oder stoffschlüssig verbunden ist.

8. Gasdüse (1) nach Anspruch 3 oder 7, **dadurch gekennzeichnet, dass** der Gasverteiler (4) mit der Gasdüse (1) lösbar verbunden, insbesondere verschraubt oder eingepresst ist.

9. Gasdüse (1) nach Anspruch 3 oder 7, **dadurch gekennzeichnet, dass** der Gasverteiler (4) mit der Gasdüse (1) fest verbunden, insbesondere verklebt, verlötet oder in die Gasdüse (2) eingepresst ist.

10. Brennerhals (10) zum Lichtbogenfügen wenigstens eines Werkstücks, vorzugsweise zum Lichtbogenschweißen oder Lichtbogenlöten, mit einer im Brennerhals (10) angeordneten Elektrode oder einem Draht zum Erzeugen eines Lichtbogens zwischen der Elektrode oder dem Draht und dem Werkstück und mit einer Gasdüse (1) zum Ausströmen eines Schutzgasstromes aus einem Gasaustritt (2) gemäß einem der vorherigen Ansprüche.

11. Brennerhals (10) nach Anspruch 10, **dadurch gekennzeichnet, dass** ein Filterring (12) aus Sintermaterial zur Druckminderung vorgesehen ist, wobei der Filterring (12) in der Gasdüse (1) stromabwärts innerhalb des in einem Teilbereich doppelwandig ausgebildeten Gasverteilerabschnitts (3) angeordnet ist.

12. Brennerhals (10) nach Anspruch 10 oder 11, **dadurch gekennzeichnet, dass** ein elektrischer Isolator (15) ein mit einer Stromkontaktdüse (11) elektrisch verbundenes Innenrohr (13) des Brennerhalses (10) gegenüber einem vom Innenrohr (13) beabstandetem Außenrohr (14) des Brennerhalses (10) elektrisch isoliert.

13. Brennerhals (10) nach einem der Ansprüche 10 bis 12, **dadurch gekennzeichnet, dass** ein vor einer Isolationskappe (15) angeordneter Spritzerschutz (9) zum Schutz vor Schweißspritzern vorgesehen ist, welcher insbesondere aus glasfasergefülltem PTFE besteht.

14. Brenner mit einem Brennerhals (10) nach einem der Ansprüche 10 bis 13.

15. Verfahren zum Lichtbogenfügen von wenigstens einem Werkstück, vorzugsweise zum Lichtbogenschweißen oder Lichtbogenlöten, mit einer Elektrode oder einem Draht zum Erzeugen eines Lichtbogens zwischen der Elektrode oder dem Draht und dem Werkstück, mit einem Schutzgasstrom, welcher aus einer Gasdüse (1) nach einem der Ansprüche 1 bis 9 ausströmt und die Strömungsrichtung des Schutzgasstroms mittels eines Gasverteilerabschnitts (3) wenigstens einmal geändert wird, so dass die Strömungsdauer bzw. der Strömungsweg des Schutzgasstromes innerhalb der Gasdüse (1) verlängert wird, wobei der Schutzgasstrom die Elektrode oder der Draht am Gasaustritt (2) der Gasdüse (1) im Wesentlichen umgibt.

## Claims

1. Gas nozzle (1) for outflow of a protective-gas stream from a gas exit (2) of the gas nozzle (1), with a gas-distributor portion (3), wherein, at least in a sub-region of the gas-distributor portion (3), the gas nozzle (1) is of double-walled form to form a flow chamber (16) for the protective-gas stream, **characterized in that**, as seen in the direction of the gas flow, the gas-distributor portion (3) has a gas-inlet opening, a double-walled part and then, at the circumferential side in said double-walled part, multiple gas-outlet openings (8), which are arranged approximately equidistantly from one another, so that the gas exit (2) is in fluidic connection with the gas-outlet openings (8).

2. Gas nozzle (1) according to Claim 1, **characterized in that** the gas-distributor portion (3) and the gas nozzle (1) are of monolithic form.

3. Gas nozzle (1) according to Claim 1, **characterized in that** the gas-distributor portion (3) is formed by a gas distributor (4) which is fastened to the gas nozzle (1).

4. Gas nozzle (1) according to one of Claims 1 to 3, **characterized in that** the inner diameter (5), defined by the gas nozzle (1) and an adjoining gas-distributor-portion surface (6), of the gas nozzle (1) is configured so as to be of constant form downstream of the gas stream or so as to taper conically in the flow direction.

5. Gas nozzle (1) according to one of the preceding claims, **characterized in that** the gas distributor (4) consists of a metallic material, in particular copper or copper alloys, in particular CuCrZr, CuDHP, or else of impact-resistant glass ceramics.

6. Gas nozzle (1) according to one of the preceding claims, **characterized in that** the gas-distributor portion (3) or the gas distributor (4) is, at least sectionally, attached in a substantially flush manner to the gas nozzle (2).

7. Gas nozzle (1) according to Claim 3, **characterized in that** the gas distributor (4) is connected in a form-fitting and/or force-fitting and/or materially bonded manner to the gas nozzle (1).

8. Gas nozzle (1) according to Claim 3 or 7, **characterized in that** the gas distributor (4) is connected in a releasable manner to the gas nozzle (1), in particular is screwed thereto or press-fitted therewith.

9. Gas nozzle (1) according to Claim 3 or 7, **characterized in that** the gas distributor (4) is connected fixedly to the gas nozzle (1), in particular is adhesively bonded or soldered thereto or is pressed into the gas nozzle (2).

10. Burner neck (10) for arc joining of at least one workpiece, preferably for arc welding or arc brazing, with an electrode, arranged in the burner neck (10), or a wire for generating an arc between the electrode or the wire and the workpiece, and with a gas nozzle (1) for outflow of a protective-gas stream from a gas exit (2) according to one of the preceding claims.

11. Burner neck (10) according to Claim 10, **characterized in that** provision is made of a filter ring (12) composed of sintered material for pressure reduction, wherein the filter ring (12) is arranged in the gas nozzle (1) downstream within the gas-distributor portion (3) of double-walled form in a sub-region.

12. Burner neck (10) according to Claim 10 or 11, **characterized in that** an electrical insulator (15) electrically insulates an inner tube (13), connected electrically to a current contact nozzle (11), of the burner neck (10) with respect to an outer tube (14), spaced apart from the inner tube (13), of the burner neck (10).

13. Burner neck (10) according to one of Claims 10 to 12, **characterized in that** provision is made of spatter protection (9) for protection against weld spatter, which is arranged in front of an insulation cap (15) and consists in particular of glass-fibre-filled PTFE.

14. Burner with a burner neck (10) according to one of Claims 10 to 13.

15. Method for arc joining of at least one workpiece, preferably for arc welding or arc brazing, with an electrode or a wire for generating an arc between the electrode or the wire and the workpiece, and with a protective-gas stream which flows out of a gas nozzle (1) according to one of Claims 1 to 9, the flow direction of the protective-gas stream being changed at least once by means of a gas-distributor portion (3) so that the flow duration or the flow path of the protective-gas stream within the gas nozzle (1) is lengthened, wherein the protective-gas stream substantially surrounds the electrode or the wire at the gas exit (2) of the gas nozzle (1).

## Revendications

1. Buse à gaz (1) destinée à l'éjection d'un flux de gaz de protection d'une sortie de gaz (2) de la buse à gaz (1) pourvue d'une portion de distribution de gaz (3), la buse à gaz (1) étant conçue à double paroi au moins dans une zone de la portion de distribution de gaz (3) afin de former un espace d'écoulement (16) destiné à l'écoulement de gaz de protection, **caractérisée en ce que** :
vue dans le sens d'écoulement de gaz, la portion de distribution de gaz (3) comporte une ouverture d'entrée de gaz, une partie à double paroi puis dans cette partie à double paroi, du côté périphérique, plusieurs ouvertures de sortie de gaz (8) disposées à peu près à la même distance les unes des autres de sorte que la sortie de gaz (2) soit en communication fluidique avec les ouvertures de sortie de gaz (8).

2. Buse à gaz (1) selon la revendication 1, **caractérisée en ce que** la portion de distribution de gaz (3) et la buse à gaz (1) sont de conception monolithique.

3. Buse à gaz (1) selon la revendication 1, **caractérisée en ce que** la portion de distribution de gaz (3) est formée par un distributeur de gaz (4) fixé à la buse à gaz (1).

4. Buse à gaz (1) selon l'une des revendications 1 à 3, **caractérisée en ce que** le diamètre intérieur (5) de la buse à gaz (1), lequel est défini par la buse à gaz (1) et une surface de portion de distribution de gaz adjacente (6), reste le même en aval du flux de gaz ou est conçu pour se rétrécir en cône dans le sens de l'écoulement.

5. Buse de gaz (1) selon l'une des revendications précédentes, **caractérisée en ce que** le distributeur de gaz (4) est en un matériau métallique, notamment en cuivre ou en alliages de cuivre, notamment en CuCrZr, CuDHP, ou en vitrocéramique antichoc.

6. Buse à gaz (1) selon l'une des revendications précédentes, **caractérisée en ce que** la portion de distribution de gaz (3) ou le distributeur de gaz (4) est accolé sensiblement à fleur à la buse à gaz (2) au moins par portions.

7. Buse à gaz (1) selon la revendication 3, **caractérisée en ce que** le distributeur de gaz (4) est relié à la buse à gaz (1) par une liaison par complémentarité de formes et/ou une liaison en force et/ou une liaison de matière.

8. Buse à gaz (1) selon la revendication 3 ou 7, **caractérisée en ce que** le distributeur de gaz (4) est relié de manière amovible à la buse à gaz (1), notamment vissé ou embouti.

9. Buse à gaz (1) selon la revendication 3 ou 7, **caractérisée en ce que** le distributeur de gaz (4) est relié de manière fixe à la buse à gaz (1), notamment collé, brasé ou pressé dans la buse à gaz (2).

10. Col de torche (10) destiné à assembler à l'arc au moins une pièce, de préférence pour le soudage à l'arc ou le brasage à l'arc, ledit col de torche comprenant une électrode, disposée dans le col de torche (10), ou un fil, destiné à générer un arc entre l'électrode ou le fil et la pièce, et une buse à gaz (1) destinée l'éjection d'un flux de gaz de protection d'une sortie de gaz (2) selon l'une des revendications précédentes.

11. Col de torche (10) selon la revendication 10, **caractérisé en ce qu'**un anneau filtrant (12) en matériau fritté est prévu pour réduire la pression, l'anneau filtrant (12) étant disposé dans la buse à gaz (1) en aval à l'intérieur de la portion de distribution de gaz (3) conçue à double paroi dans une zone.

12. Col de torche (10) selon la revendication 10 ou 11, **caractérisé en ce qu'**un isolant électrique (15) isole électriquement un tube intérieur (13) du col de torche (10), qui est relié électriquement à une buse de contact de flux (11), par rapport à un tube extérieur (14), à distance du tube intérieur (13), du col de torche (10).

13. Col de torche (10) selon l'une des revendications 10 à 12, **caractérisé en ce qu'**un pare-projections (9), notamment en PTFE chargé de fibres de verre, qui est disposé devant un capot isolant (15), est prévu pour protéger contre les projections de soudure.

14. Torche pourvue d'un col de torche (10) selon l'une des revendications 10 à 13.

15. Procédé d'assemblage à l'arc d'au moins une pièce, de préférence pour le soudage à l'arc ou le brasage à l'arc, à l'aide d'une électrode ou d'un fil, destiné à générer un arc entre l'électrode ou le fil et la pièce, d'un flux de gaz de protection qui est éjecté par une buse à gaz (1) selon l'une des revendications 1 à 9 et le sens d'écoulement du flux de gaz de protection est modifié au moins une fois au moyen d'une portion de distribution de gaz (3) de façon à prolonger la durée d'écoulement ou le chemin d'écoulement du flux de gaz de protection à l'intérieur de la buse à gaz (1), le flux de gaz de protection entourant sensiblement l'électrode ou le fil à la sortie de gaz (2) de la buse à gaz (1).
